# EUROPÄISCHE PATENTSCHRIFT

(11) **EP 0 675 992 B1**
(45) Veröffentlichungstag und Bekanntmachung des Hinweises auf die Patenterteilung: **02.09.1998**
(21) Anmeldenummer: 94903827.7
(22) Anmeldetag: 17.12.1993
(51) Int. Cl.: E04H 15/20

(54) **KAMMERANORDNUNG EINER AUFBLASBAREN STRUKTUR**
CHAMBER ARRANGEMENT FOR AN INFLATABLE STRUCTURE
AGENCEMENT DE CHAMBRES POUR UNE STRUCTURE GONFLABLE

(30) Priorität: 17.12.1992 WO PCT/EP92/02930
(43) Veröffentlichungstag der Anmeldung: 11.10.1995
(73) Patentinhaber: BRAUN, Dieter, 12165 Berlin (DE)
(72) Erfinder: BRAUN, Dieter, 12165 Berlin (DE)
(74) Vertreter: Stoffregen, Hans-Herbert, Dr. Dipl.-Phys.
(86) Internationale Anmeldenummer: EP9303602
(87) Internationale Veröffentlichungsnummer: WO9413909

(56) Entgegenhaltungen:
- DE-A- 1 817 569
- FR-A- 2 129 696
- FR-A- 2 549 510
- GB-A- 737 132
- US-A- 3 774 566
- US-A- 4 262 457
- DEUTSCHE BAUZEITSCHRIFT Nr. 7 , 18. Juli 1972 , GUTERSLOH, DE Seiten 1283 - 1299 MINKE 'Pneumatisch stabilisierte Membrantragwerke'

## Beschreibung

Die Erfindung bezieht sich auf ein Bauelement, insbesondere für Bauwerke in Leicht-bauweise wie Hallen- und Luftschiffkonstruktionen, mit ersten Wandsegmenten im Abstand voneinander, die hohl sind und unter Überdruck stehen und sich über die volle Wandstärke erstrecken, wobei zwischen den Wandsegmenten ein Zwischenraum gebildet wird, der zumindest bereichsweise als Unterdruckkammer ausgebildet ist.

Bei der Konstruktion von Bauelementen für Bauwerke in Leichtbauweise tritt die Schwierigkeit auf, daß diese zwar leicht sind, aber eine ungenügende Stabilität aufweisen. Die fehlende Stabilität wird in diesen Fällen durch Gitterkonstruktionen aus Metall, Kunststoff oder Kohlefasern erreicht. Dadurch werden die Bauelemente nicht nur schwerer, sondern weisen auch eine aufwendige Konstruktion auf, wodurch deren Herstellung verfeinert wird.

In der Abhandlung "Pneumatisch stabilisierte Membrantragwerke" von Dr. Ing. Gernot Minke in der "Deutsche Bauzeitschrift", Nr. 7, 18. Juli 1972, Seiten 1283 bis 1299, werden konstruktive und formale Möglichkeiten der Gestaltung von pneumatisch stabilisierten Membrantragwerken vorgestellt. Werden Unterdrucksysteme bei der Konstruktion von pneumatisch stabilisierten Membrantragwerken verwendet, so tritt der Nachteil auf, daß diese stets nach innen gekrümmte Wandbereiche aufweisen. Das hat zur Folge, daß bei Unterdrucksystemen sehr leicht Schnee- und Wassersäcke in der Dachfläche auftreten können und daß durch die aerodynamische Beanspruchung bei Wind Instabilitäten auftauchen können. Außerdem erfordern die Unterdrucksysteme in der Regel hohe Abstützungen am Rand oder in der Mitte. Das bedeutet also relativ materialaufwendige Sekundärkonstruktionen.

Der Erfindung liegt das Problem zugrunde, ein Bauelement zu entwickeln, das bei leichter Bauweise eine hohe Stabilität und wärmeisolierende Wirkung aufweist.

Das Problem wird bei einer Anordnung der eingangs beschriebenen Art erfindungsgemäß dadurch gelöst, daß jeweils ein an einer Wandaußenseite beginnender Teil der Zwischenräume zwischen den ersten Wandsegmenten von unter Überdruck stehenden, hohlen zweiten Wandsegmenten ausgefüllt ist, die mit einer zwischen den wandinnenseitigen Enden der ersten Wandabschnitte angeordneten Wand und den Wänden der ersten Wandabschnitte die Unterdruckkammern bilden, wobei in den Unterdruckkammern ein Vakuum zur Erzeugung eines Auftriebs einstellbar ist.

Durch diese Kammerkonstruktion steht ein vielseitig verwendbares Bauelement für Bauwerke in Leichtbauweise zur Verfügung. Die unter Überdruck stehenden Kammern verleihen der Kammeranordnung eine hohe Stabilität. Durch die isolierende Wirkung der evakuierten Kammerelemente kann die Anordnung ebenfalls als Wärmeisolation Verwendung finden. Durch Variation der Kammerquerschnitte kann die Form des Bauelementes entsprechend den Anwendungen variiert werden. Somit kann das Bauelement z.B. für eine kuppelförmige oder tonnenförmige Dachkonstruktion ausgebildet sein. Dabei sind die Querschnitte der Wandsegmente bausteinartig an die Wand oder Dachform angepasst und z.B. rechteckförmig oder trapezförmig ausgebildet. Die Wandsegmente, die unter Überdruck stehen, sind fest miteinander verbunden, so daß eine sich selbst tragende Konstruktion gebildet wird, die für größere Bauelementeinheiten geeignet sind. Bei einem niedrigen Druck in den Aussparungen wird bereits eine gute thermische Isoliereigenschaft erreicht. Zusätzlich zu dem durch die thermische Isolierung erreichten großen Wärmeübergangswiderstand können lichtdurchlässige Materialien für die Folie verwendet werden. Die Innenräume der Wandsegmente sind z.B. durch Öffnungen miteinander verbunden, so daß in allen Wandsegmenten gleichzeitig der Überdruck durch Einblasen von Luft bzw. eines Gases wie Helium erzeugt werden kann.

Vorteilhaft kann die Kammeranordnung als Bauelement für eine Hallenkonstruktion angewendet werden. Hier bietet sich vor allem die Verwendung als Hallendachkonstruktion an, da hierbei auf eine konstruktiv aufwendige Trägerkonstruktion für das Hallendach verzichtet werden kann.

Bei einer anderen günstigen Vorrichtung ist die Kammeranordnung derart gestaltet, daß sie Wände aufweist, von denen wenigstens eine zwei gleich ausgebildete, jeweils innen und außen angeordnete Hälften enthält, die jeweils im Abstand voneinander angeordnete, hohle, unter Überdruck stehende erste Wandsegmente aufweisen, daß jeweils die von einer Wandaußenseite beginnenden Zwischenräume zwischen den ersten Wandsegmenten teilweise von weiteren, hohlen, unter Überdruck stehenden zweiten Wandsegmenten ausgefüllt sind, die mit den ersten Wandsegmenten verbunden sind, daß an die den Wandaußenseiten abgewandten Seiten der ersten Wandsegmente Folien unter dem in den wandsegmentfreien Zwischenräumen herrschenden Unterdruck angedrückt sind, und daß die ersten Wandsegmente der beiden Hälften um die Hälfte des Abstands der Wandsegmente versetzt zueinander angeordnet sind.

Bei dieser Vorrichtung ergibt sich eine sehr gute thermische Isolierung bei hoher Festigkeit des Bauelementes. Die Wandsegmente jeweils einer Hälfte können ebenfalls durch Öffnungen miteinander verbunden sein, um gleichzeitig in allen Wandsegmenten Überdruck erzeugen zu können. Die thermische Isolierung kann um so besser sein, je größer der Unterdruck in den Zwischenräumen zwischen den ersten Wandsegmenten ist.

Bei derartigen Vakuum-Unterdruckkammer-Konstruktionen wird ein Gehäuse mit gewisser Stabilität erzeugt. Hierdurch kann wiederum weitgehend bei einer Dachkonstruktion auf schwere und wärmeleitende Stützelemente für das Tragwerk verzichtet werden.

In einer bevorzugten Vorrichtung ist vorgesehen, daß die Kammeranordnung ein Bauelement für eine Halle bzw. Hallenkonstruktion ist. Die Hallenkonstruktion ist dabei derart gestaltet, daß die Halle einen gegenüber der Umgebung höheren Druck aufweisenden Innenraum umschließt, daß die Halle eine Hallendachkonstruktion aufweist, die als wenigstens doppelwandige Hülle ausgebildet ist, daß die Hülle eine Außenhülle und eine Innenhülle umfaßt, die durch gasgefüllte Stützsegmente zueinander beabstandet sind und daß im zwischen den Stützsegmenten vorhandenen Zwischenraum ein Vakuum erzeugbar ist.

Durch die besonders leichte aber dennoch stabile Konstruktion der Kammeranordnung kann diese als Hallendachkonstruktion Verwendung finden. Somit ist es möglich, durch einen in dem Innenraum der Halle erzeugten Überdruck die Dachkonstruktion in eine stabile Lage zu bringen. Zusätzlich wird die Stabilität der Anordnung durch die gasgeführten Stützsegmente erhöht. Durch die evakuierten Zwischenräume zwischen den Stützsegmenten wird zudem eine hohe Isolationswirkung erreicht. Aufwendige, schwere und kostenaufwendige Tragwerke können somit vermieden werden.

Vorzugsweise ist die Hallenkonstruktion derart gestaltet, daß bei Erwärmung des Innenraums der Hallenkonstruktion diese einen Auftrieb derart erfährt, daß die Hallenkonstruktion schwebt. Aufgrund der guten Isolationseigenschaften der Hallendachkonstruktion ist der Innenraum der Halle gegenüber der Umgebung gut wärmeisoliert. Findet kein Luftaustausch mit der Umgebung statt, so kann sich die in dem Innenraum eingeschlossene Luftmenge durch Sonneneinstrahlung so stark erwärmen, daß die Hallenkonstruktion, ähnlich wie ein Heißluftballon, einen Auftrieb erfährt. Der Auftrieb kann durch das Vakuum in den Kammern der Dachkonstruktion verstärkt werden. Dadurch wird es möglich, die Hallenkonstruktion mit Hilfe von Lasthubschraubern oder Luftschiffen einfach zu transportieren.

Bei einer weiteren vorteilhaften Kammeranordnung, insbesondere für einen Ballon oder ein Luftschiff, ist vorgesehen, daß sich von einer zentralen Kammer strahlenförmige, röhrenförmige mit Gas gefüllte Stützsegmente nach außen erstrecken, daß die Stützsegmente peripher von einer Hülle umschlossen sind, wobei ein von der Hülle umgebender Balloninnenraum druckeinstellbar ist. Der Druck in dem Balloninnenraum kann in dieser Anordnung, z.B. über ein an der Hülle angebrachtes Ventil und eine Vakuumpumpe, derart eingestellt werden, daß dort ein Vakuum entsteht. Durch dieses Vakuum sind die röhrenförmigen mit Gas gefüllten Stützsegmente nahezu ideal isoliert. Durch Einfallen des Sonnenlichts kann das Gas z.B. Helium stark erhitzt werden. Durch den steigenden Druck wird die Kammerstruktur stabiler, wodurch das Vakuum im Balloninnenraum erhöht werden kann.

Es ist günstig, daß die Hülle ein mit einer Vakuumpumpe zusammenwirkendes Ventil aufweist. Dadurch kann der Druck innerhalb des Balloninnenraums beliebig eingestellt werden. Durch Evakuieren des Innenraums und Variieren des Vakuums kann der Auftrieb der Kammeranordnung wie Ballon oder Luftschiff gesteuert werden. Vorteilhaft weisen die Stützsegmente eine Außenhülle auf, die aus hochfesten, wärmeabsorbierenden und hitzebestandigen Folien besteht. Da das Gas durch Einfallen des Sonnenlichts stark erhitzt wird und dadurch einen sehr hohen Druck annehmen kann, müssen die Außenhüllen der Stützsegmente aus hochfesten und hitzebestandigen Folien bestehen. Die wärmeabsorbierenden Eigenschaften der Außenhülle bieten den Vorteil, daß die Wärmeausbeute der einfallenden Sonnenstrahlen verbessert wird.

Vorteilhaft weisen die Stützsegmente an ihren Enden einen Wärmeisolator zur Aufnahme der Hülle auf. Aufgrund der hohen Temperaturen des in den Stützelementen eingeschlossenen Gases muß die Außenhülle aus Sicherheitsgr ünden und zur Wärmeisolierung gegenüber den Stützsegmenten isoliert angeordnet sein.

In einer weiteren bevorzugten Anordnung weist das Kammersystem eine Wärmekraftmaschine bestehend aus einem Verdampfer, einer Energiewandlereinheit und Rohrleitungen auf. Dabei ist der Verdampfer in der zentralen Kammer angeordnet. Das in den Stützsegmenten durch Sonneneinstrahlung erhitzte Gas kann mittels Umwälzelementen wie Pumpen durch Verbindungen zwischen den Stützsegmenten und der inneren Kammer in diese gelangen. In der zentralen Kammer wird die in dem Gas befindliche innere Energie durch den Verdampfer umgewandelt und in Form von Wasserdampf abgeführt. Die Abführung der Wärme ist notwendig, da aufgrund der guten Isolationseigenschaften des Vakuums die Temperatur des in den Stützsegmenten befindlichen Gases derart ansteigen würde, was zu einer Zerstörung der Stützsegmente führen würde.

Die Kammeranordnung kann einen Energiespeicher und einen Wasserspeicher aufweisen, die in dem evakuierten Innenraum angeordnet sind. Der Energiespeicher kann z.B. für die Aufnahme von Wasserdampf ausgebildet sein. Durch die fast ideale Wärmeisolierung in dem evakuierten Innenraum bleibt der Wasserdampf dort über längere Zeit gespeichert. Der gespeicherte Wasserdampf kann zu einem späteren Zeitpunkt der Energiewandlereinheit zugeführt und dort in elektrische Energie umgewandelt werden. In einer besonders bevorzugten Ausgestaltung ist die Kammeranordnung als Luftschiff ausgebildet, wobei die Kammeranordnung eine kugelförmige, ellipsoidische oder diskusartige Form aufweist und wobei an der Hülle eine Gondel angebracht ist, die einen Antrieb aufweist. Dadurch ist die Anordnung zum Transportieren schwerer Lasten geeignet und manövrierfähig.

Weitere Einzelheiten, Vorteile und Merkmale der Erfindung ergeben sich nicht nur aus den Ansprüchen und den diesen zu entnehmenden Merkmalen -für sich und/oder in Kombination-, sondern auch aus der folgenden Beschreibung eines in einer Zeichnung dargestellten bevorzugten Ausführungsbeispiels.

Es zeigen:
- Fig. 1a: eine Kammeranordnung im Längsschnitt,
- Fig. 1b: eine andere Ausführungsform der Kammeranordnung im Längsschnitt,
- Fig. 2: eine andere Ausführungsform der Kammeranordnung im Längsschnitt,
- Fig. 3: die in Fig. 2 dargestellte Kammeranordnung längs der Linie 1-1,
- Fig. 4: eine Hallenkonstruktion im Längsschnitt,
- Fig. 5: eine vergrößerte Darstellung der Hallendachkonstruktion nach Fig. 4,
- Fig. 6: eine auf einer Kammeranordnung basierende Konstruktion eines Ballons im Querschnitt,
- Fig. 7: eine auf einer Kammeranordnung beruhende Konstruktion eines Luftschiffes im Querschnitt.

Die Fig. 1a zeigt eine Vakuum-, Überdruckkammerkonstruktion, bei der eine Kombination aus Vakuum- und Überdruckkammern ein stabiles Bauelement erzeugen. Hierdurch kann weitestgehend bei der Dachkonstruktion auf schwere und wärmeleitende Stützelemente für das Tragwerk verzichtet werden.

Eine Kammeranordnung (180), die z.B. als Dachkonstruktion für eine Halle benutzt werden kann, enthält erste Wandsegmente (181), die kammerartig ausgebildet, innen hohl und im Abstand voneinander angeordnet sind. Die Wandsegmente (181) haben in etwa einen rechteckförmigen Querschnitt. Vorzugsweise ist ein leicht trapezförmiger Querschnitt vorhanden, wenn eine tonnenförmige Wölbung geschaffen werden soll. Zwischen jeweils zwei Wandsegmenten (181), die sich über die gesamte Wandstärke erstrecken, sind zweite Wandsegmente (182) angeordnet, die kammerartig ausgebildet und innen hohl sind. Die zweiten Wandsegmente (182) beginnen ebenso wie die ersten Wandsegmente auf der Außenseite der Wand (180), erstrecken sich aber nicht über die gesamte Wandstärke, sondern nur über einen Teil, wobei der restliche Teil des Zwischenraums zwischen je zwei Wandsegmenten (181) frei bleibt.

Bei der in Fig. 1a dargestellten Ausführungsform füllen die zweiten Wandsegmente jeweils die Hälfte der Zwischenräume aus. Die zweiten Wandsegmente (182) haben ebenfalls in etwa rechteckige oder leicht trapezförmige Querschnitte und sind bausteinartig an die Wandform angepaßt. Die Hohlräume der Wandsegmente (181), (182) stehen unter Überdruck und sind miteinander verbunden. Hierdurch bilden sie eine stabile Tragkonstruktion. Eine gasdichte Wand (183) ist zwischen den wandinnenseitigen Enden der ersten Wandabschnitte (181) angeordnet und bildet mit den Wänden der Wandsegmente (181), (182) Unterdruckkammern (184). Die Über- und Unterdruckkammern der Wand (180) sind in Fig. 1a durch Plus- und Minuszeichen charakterisiert. Die Wandsegmente (181), (182) können durch Öffnungen miteinander verbunden sein, wodurch einerseits eine gleichzeitige Befüllung mit Druckgas und andererseits ein gleichmäßiger Druck erreicht wird. Auch die Unterdruckkammern (184) können ebenfalls durch Öffnungen miteinander verbunden sein, so daß auch in diesen Kammern durch gleichzeitiges Evakuieren ein gleichmäßiger Unterdruck bzw. Vakuum herrschen kann.

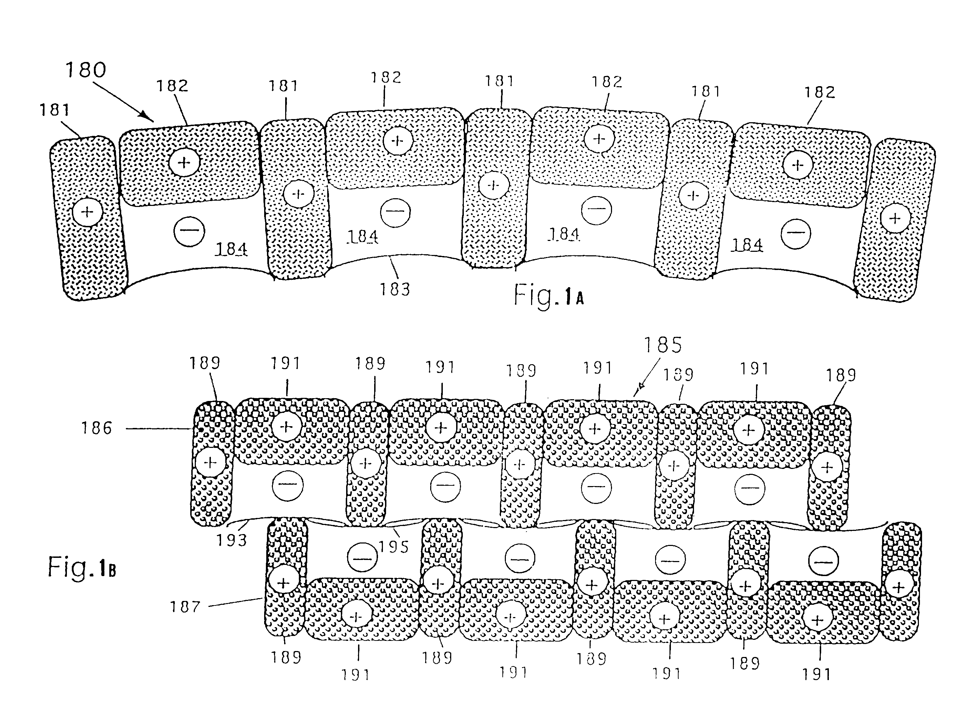

Die Fig. 1b zeigt eine Kammeranordnung (185), die zwei gleich ausgebildete Hälften, nämlich eine äußere Hälfte (186) und eine innere Hälfte (187) aufweist. Jede Hälfte (186), (187) enthält erste Wandsegmente (189), die im Abstand voneinander angeordnet und innen hohl sind, ungefähr rechteckige oder trapezförmige Querschnitte haben und unter Überdruck stehen. Zwischen den ersten Wandsegmenten (189) befinden sich jeweils zweite Wandsegmente (191), die ebenfalls innen hohl sind, ungefähr rechteckige oder trapezförmige Querschnitte haben und unter Überdruck stehen. Die Wandsegmente (191) beginnen wie die Wandsegmente (191) an der Wandaußenseite und verlaufen nicht wie die ersten Wandsegmente (189) über die halbe Wandstärke, sondern nur über einen Teil der Wand. Eine gasdichte Folie (193) ist gegen die in der Wandmitte liegenden Enden der ersten Wandsegmente (189) angelehnt. Die nicht von den zweiten Wandsegmenten (191) ausgefüllten Zwischenräume zwischen den ersten Wandsegmenten (189) stehen unter Unterdruck, wodurch die Folie (193) gegen die Wandsegmente (189) gedrückt wird. In gleicher Weise wird eine gasdichte Folie (195) gegen die ersten Wandsegmente der inneren Hälfte (187) gedrückt, die gleichartig wie die äußere Hälfte (187) ausgebildet ist.

Die Wandsegmente (189), (191) der beiden Hälften (186), (187) sind um den halben Abstand zweier Wandsegmente (189) versetzt zueinander angeordnet. Deshalb liegen die in der Wandmitte angeordneten Enden der Wandsegmente (189) jeweils an der Folie der gegenüberliegenden Hälfte an. Die Wandsegmente (189), (191) sind fest miteinander verbunden. Durch die Versetzung der beiden Hälften (186), (187) grenzen die unter Unterdruck stehenden Räume der beiden Hälften (186), (187) aneinander. Die Wandsegmente (189) der beiden Hälften (186), (187) sind lediglich durch die schlechte wärmeleitenden Folien (193), (195) miteinander verbunden.

Die in Fig. 1b dargestellte Kammeranordnung hat daher ein besonders gutes Wärmeisoliervermögen.

Die Wandsegmente (189), (191) je in einer Hälfte können durch nicht dargestellte Öffnungen miteinander verbunden sein, so daß in allen Kammern zugleich der gleiche Überdruck erzeugt werden kann. Hinsichtlich des Unterdrucks bzw. Vakuums gilt dies auch für die Unterdruckkammern, die von den Wandsegmenten (189), (191) und den Folien (193) bzw. (195) eingeschlossen werden.

In Fig. 1b sind in den Überdruckkammern Pluszeichen zur Andeutung des Überdrucks und in den Unterdruckkammern Minuszeichen zur Andeutung des Unterdrucks eingetragen. Die Vorrichtung gemäß Fig. 1b eignet sich als Dachkonstruktion für eine Halle, wobei die Wandsegmente bausteinartig an die Gewölbeform angepaßt sind. Die Wandmaterialien der Wandabschnitte (191), (189) und der Folien (193), (195) können lichtdurchlässig sein.

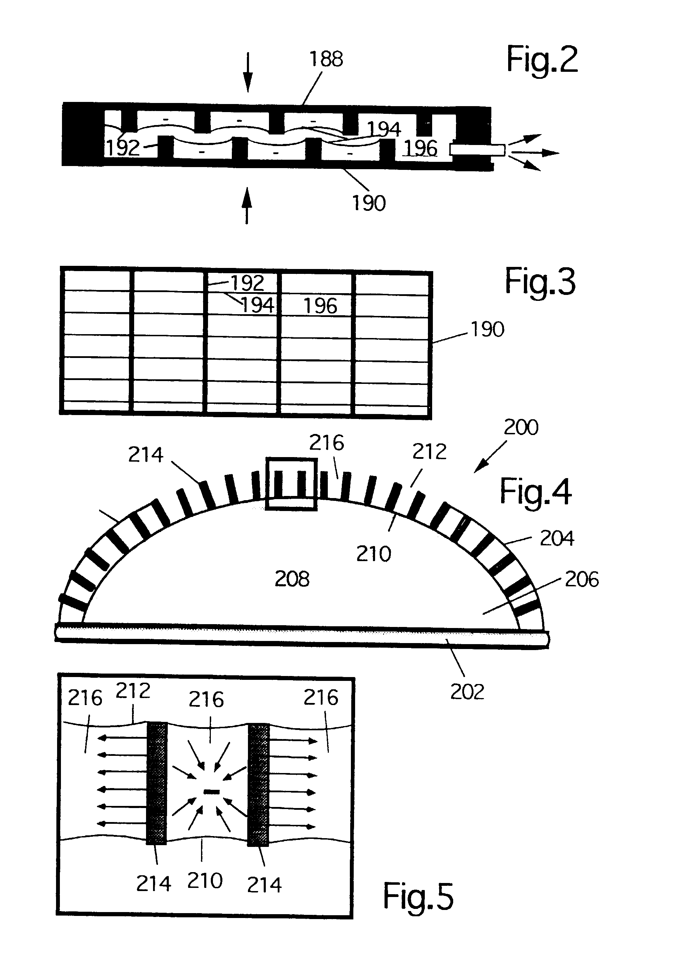

Die Fig. 2 und 3 zeigen Kammeranordnungen, die jeweils zwei Platten (188), (190) aufweisen, von deren Innenseiten Noppen bzw. Wülste (192) in regelmäßigen Abständen vorspringen. Die Wülste (192) der beiden Platten (188), (190) sind gegeneinander versetzt. Über die Wülste (192) ist ein Netzwerk von gestrafften, möglichst unelastischen Schnüren bzw. Seilen (194) gespannt, die eine geringe Wärmeleitfähigkeit haben. Im Hohlraum (196) zwischen den Platten (188), (190) wird Unterdruck bzw. Vakuum erzeugt, wodurch sich die Wülste (192) gegen die Seile (194) legen, die die vom Luftdruck auf die Platten (188), (190) ausgeübte Kraft aufnehmen, d. h. die Seile (192) aus Kunststoff halten die beiden Platten (188), (190) voneinander fern. Die in Fig. 2 und 3 dargestellte Vorrichtung wirkt demnach in Bezug auf die Seile (194) nach Art einer Hängebrückenkonstruktion.

Fig. 4 zeigt eine Hallenkonstruktion (200), die im wesentlichen aus einem Hallenboden (202), über den sich bogenförmig eine Hallendachkonstruktion (204) erstreckt, einer Rückwand (206) und einer nicht dargestellten Vorderwand besteht. Die Hallendachkonstruktion (204) besteht im wesentlichen aus einer einem Innenraum (208) zugewandten Innenhülle (210) und einer Außenhülle (212). Zwischen der Innenhülle (210) und der Außenhülle (212) erstrecken sich Stützsegmente (214), die kammerartig ausgebildet, innen hohl und im Abstand voneinander angeordnet sind. Die Stützsegmente (214) haben etwa einen rechteckförmigen Querschnitt. Als Baumaterial für die Hallendachkonstruktion kann eine transparente Folie verwendet werden. Die axiale Erstreckung der Stützsegmente (214) entspricht in etwa der axialen Erstreckung der Hallendachkonstruktion (204). Die Stützsegemente (214) sind derart ausgeführt, daß sie mit Gas, wie z.B. Helium gefüllt werden können. Vorzugsweise sind die Stützsegmentkammern (214) untereinander verbunden, so daß eine gemeinsame Gasbefüllung stattfinden kann. Durch den Gasdruck erhalten die Stützsegmente (214) ihre Stabilität. Der Druck im Innenraum (208) wird bei Betrieb der Hallenkonstruktion (200) gegenüber der Umgebung erhöht. Dadurch wirken nach außen gerichtete Kräfte insbesondere auf die Innenhülle (210), wodurch die Hallendachkonstruktion (204) aufgebläht wird. Parallel dazu wird in den Kammern (216), die sich zwischen den Stützelementen (214) befinden, ein immer stärkeres Vakuum erzeugt. Auch die Vakuumkammern (216) stehen untereinander in Verbindung, so daß sie gemeinsam evakuiert werden können. Sowohl durch den Druck im Innenraum (208) als auch durch das erzeugte Vakuum in den Kammern (216) werden auf die Hallendachkonstruktion (204) erhebliche Kräfte ausgeübt. Der Hallenboden (202) ist derart ausgebildet, daß er bei geringstem Gewicht eine maximale Festigkeit aufweist. Er kann die Kammeranordnung (180) aufweisen, die dann entsprechend mit einer Gitterkonstruktion z.B. aus Kohlefasern stabilisiert wird.

In Fig. 5 ist ein vergrößerter Ausschnitt der Hallendachkonstruktion (204) dargestellt, in der verdeutlicht wird, daß sich die durch den Innendruck auftretenden Zugkräfte mit den durch das Vakuum in der Kammer (216) auftretenden Kräften im Gleichgewicht befinden.

In der Praxis kann sich durch die starke Isolierung der Hallendachkonstruktion (204) aufgrund der Vakuumkammer (216) bei vermindertem Luftaustausch die eingeschlossene Luftmenge im Innenraum (208) so stark erwärmen, daß die Hallenkonstruktion (200) nach dem Prinzip eines Heißluftballons eine Auftriebskraft erfährt. Dadurch wird ermöglicht, auch größere Hallenkonstruktionen einem Transport z.B. mit Lasthubschraubern oder Luftschiffen zugänglich zu machen.

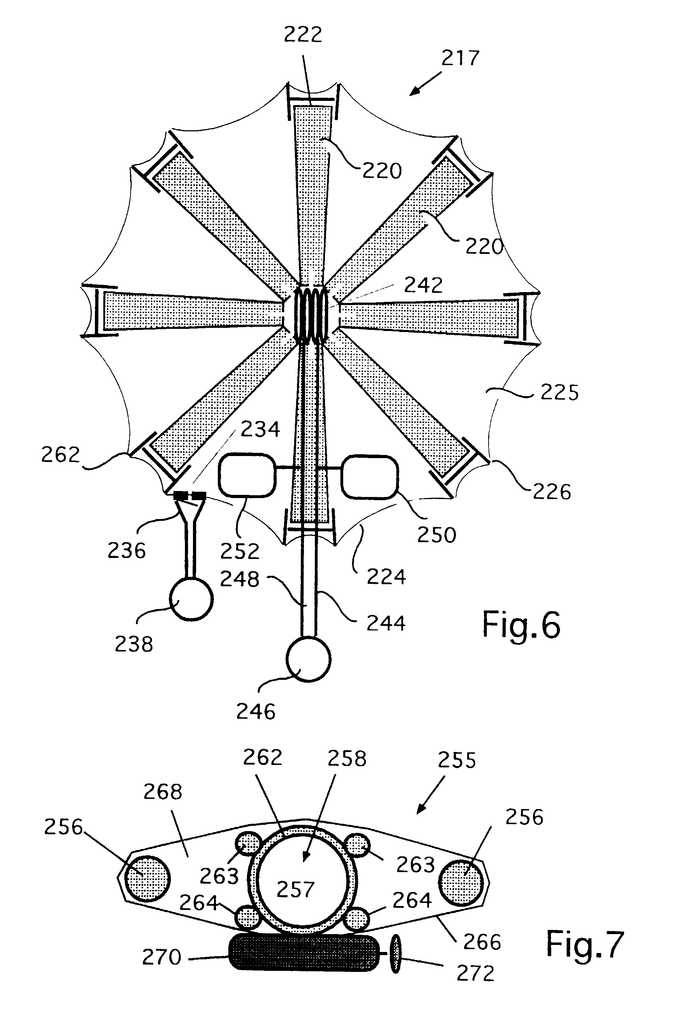

Fig. 6 zeigt die schematische Darstellung eines Gas-Vakuum-Ballons (217) im Querschnitt. Von einer zentralen Kammer (218) erstrecken sich strahlenförmig Stützelemente (220) derart, daß deren Enden (222) quasi auf einer fiktiven Kugeloberfläche liegen. Die Enden (222) können auch auf anderen fiktiven räumlichen Oberflächen wie z.B. einer räumlichen Ellipse oder einer Diskusscheibenform liegen. Die strahlenförmige Anordnung der Stützelemente (220) ist von einer vorzugsweise transparenten Ballonhülle (224) umgeben, wodurch ein Balloninnenraum (225) eingeschlossen wird. Zwischen den Enden (222) der Stützelemente (220) und der Ballonhülle (224) sind Haltevorrichtungen (226) zur Befestigung der Ballonhülle (224) an den Enden (222) vorgesehen. Die Stützsegmente (220) sind kammerartig ausgebildet, innen hohl und haben vorzugsweise eine kegelstumpfartige Form, die ihren kleineren Durchmesser in Richtung zur zentralen Kammer (218) aufweist. Die Stützsegmente (220) weisen vorzugsweise eine Hülle (228) auf, die aus einer hochfesten, wärmeabsorbierenden hitzebeständigen Folie besteht.

In der Praxis sind die zentrale Kammer (218) sowie auch die Stützsegmente (220) mit einem Gas wie z.B. Helium gefüllt. Durch den Gasdruck erhält die Kammerstruktur eine hohe Festigkeit. Die Stützsegmente (220) stehen mit der zentralen Kammer (218) über Durchbrechungen (230) miteinander in Verbindung, wodurch ein Gasaustausch stattfinden kann. Die zentrale Innenkammer (218) sowie die Stützsegmente (220) können zusätzlich Mittel zur Umwälzung des Gases (nicht dargestellt) aufweisen, wodurch ein ständiger Gasaustausch zwischen den Segmenten (220) und der Kammer (218) möglich wird.

In die Ballonhülle (224) ist eine Durchbrechung (234) eingebracht, in die ein Ventil (236) eingesetzt ist, das mit einer Vakuumpumpe (238) verbunden ist, womit in dem Balloninnenraum (225) ein Vakuum erzeugt werden kann.

Es besteht auch die Möglichkeit, über das Ventil (236) oder ein anderes Ventil (nicht dargestellt), Luft in den Balloninnenraum (225) einströmen zu lassen.

Weiterhin weist der Ballon (217) in seiner zentralen Kammer (218) einen Verdampfer (242) auf, der über eine Rohrleitung (244) mit einer Energiewandlereinheit (246) verbunden ist. Die Energiewandlereinheit (246) ist derart ausgebildet, daß sie Wärmeenergie in Form von Dampf in elektrische Energie umwandeln kann. Durch eine weitere Rohrleitung (248) ist die Energiewandlereinheit (246) wieder mit dem Verdampfer (242) verbunden. Im Verlauf der Rohrleitung (244) ist vorzugsweise ein Druckbehälter (250) angeordnet, der zur Energiespeicherung dienen kann. Der Druckbehälter (250) kann auch innerhalb der evakuierten Ballonhülle (224) angeordnet sein, wodurch dieser gegenüber der Umwelt optimal wärmeisoliert ist. Der Druckbehälter kann als Energiespeicher verwendet werden. Im Verlauf der Rohrleitung (248) ist ein Wasserkessel (252) angeordnet, der zur Speicherung von Wasser dienen kann. Der Wasserkessel (252) kann ebenfalls innerhalb der evakuierten Ballonhülle (224) angeordnet sein.

Beim Betrieb des Gas-Vakuum-Ballons kann das Gas wie z.B. Helium, das sich innerhalb der Stützsegmente (220) befindet, durch Sonneneinstrahlung allmählich stark erhitzt werden. Durch das die Stützsegmente (220) umgebende Vakuum sind diese gegenüber der Umgebung nahezu ideal isoliert, so daß keine Wärmeabgabe an die Umgebung stattfinden kann. Die Wärmeenergie durch Sonneneinstrahlung kann daher nahezu vollständig in innere Energie des Gases umgewandelt werden. Erreicht das Gas wie z.B. Helium eine Temperatur von z.B. über 100° C, kann über den Verdampfer (242) einströmendes Wasser in Wasserdampf umgewandelt werden. Über die Rohrleitung (242) wird der Wasserdampf der Energieumwandlereinheit (246) zugeführt, in der die Wärmeenergie in elektrische Energie umgewandelt wird. Durch einen in der Energiewandlereinheit (246) befindlichen Kondensator wird der Rest Wasserdampf wieder in Wasser umgeformt und dem Verdampfer (242) über die Rohrleitung (248) wieder zugeführt. Mit der erzeugten elektrischen Energie kann z.B. die Vakuumpumpe betrieben werden.

Wie schon weiter oben erwähnt wurde, steigt der Gasdruck innerhalb der Stützsegmente (220) durch Wärmeeinstrahlung an, wodurch die Kammerstruktur aus den Stützsegmenten (220) eine größere Festigkeit erhält. Dadurch ist die Möglichkeit gegeben, in dem Balloninnenraum (225) ein stärkeres Vakuum zu erzeugen, wodurch wiederum die Isolation verbessert wird. Durch die Anordnung kann mit geringen Mengen eines Gases, wie z.B. Helium ein großer Auftrieb erzeugt werden, der durch Variieren des Vakuums exakt gesteuert werden kann. Als Balastalternative kann in diesem Fall die umgebende Luft dienen.

Fig. 7 zeigt die Kontruktion eines Gas-Vakuumluft-Schiffes (255) in einer schematischen Querschnittsdarstellung. Die Anordnung besteht im wesentlichen aus einem kreisringförmigen Stützsegment (256), in dessen Zentrum (257) sich eine weitere Anordnung von Stützsegmenten (258) befindet. Die Stützsegmentanordnung (258) weist eine kugelförmige Kammer (262) auf, an der zwei zu dem Sützsegment (256) parallel liegende ebenfalls kreisringförmige Stützsegmente (263, 264) anliegen. Die Anordnung der Stützsegmente (256) bzw. (258) wird von einer Hülle (266) eingeschlossen. Die äußere Form der Hülle (266) entspricht somit der Form eines Diskus. Wie in der oben beschriebenen Anordnung des Ballons (217) sind auch hier die Stützsegmente mit einem Gas wie z.B. Helium gefüllt. Durch den Gasdruck erhalten die Stützsegmente ihre Stabilität. Ein von der Hülle (266) eingeschlossener Innenraum (268) kann wie im Fall des Ballons (217) ebenfalls evakuiert werden. Das Luftschiff (254) weist weiterhin eine Kabine (270) auf, die mit der Hülle (266) in Verbindung steht. An der Kabine (270) ist ein Antrieb (272) angebracht. Wie bei dem Ballon (217) ist auch bei dieser Konstruktion durch Variieren des Vakuums in dem Innenraum (268) eine exakte Höhensteuerung des Luftschiffs (254) möglich. Auch kann der Antrieb (272) mittels Sonnenenergie betrieben werden. Vorteilhaft sind die Hülle (266) und Stützsegmente (256), (260), (262), (264) aus einem leichten folienartigen Material, so daß die Hülle (266) bzw. die Stützsegmente kurzfristig zusammengefaltet werden können. Es ist anzumerken, daß auch die Ballonanordnung (217) mit einer Kabine (270) ausgestattet werden kann und somit als Luftschiff dienen kann. Die äußere Form und die Größe kann entsprechend der zu transportierenden Last gewählt werden.

## Patentansprüche

1. Bauelement, insbesondere für Bauwerke in Leichtbauweise wie Hallen- und Luftschiffkonstruktionen, mit ersten Wandsegmenten (181) im Abstand voneinander, die hohl sind und unter Überdruck stehen und sich über die volle Wandstärke erstrecken, wobei zwischen den Wandsegmenten (181) ein Zwischenraum gebildet wird, der zumindest bereichsweise als Unterdruckkammer (184) ausgebildet ist,
**dadurch gekennzeichnet,**
daß jeweils ein an einer Wandaußenseite beginnender Teil der Zwischenräume zwischen den ersten Wandsegmenten (118) von unter Überdruck stehenden, hohlen zweiten Wandsegmenten (118) ausgefüllt ist, die mit einer zwischen den wandinnenseitigen Enden der ersten Wandabschnitte (181) angeordneten Wand (183) und den Wänden der ersten Wandabschnitte (181, 182) die Unterdruckkammern (184) bilden, wobei in den Unterdruckkammern (184) ein Vakuum zur Erzeugung eines Auftriebs einstellbar ist.

2. Bauelement, insbesondere nach Anspruch 1,
**dadurch gekennzeichnet,**
daß die Kammeranordnung Wände aufweist, von denen wenigstens eine (185) zwei gleich ausgebildete, jeweils innen und außen angeordnete Hälften (186, 187) enthält, die jeweils im Abstand voneinander angeordnete, hohle, unter Überdruck stehende erste Wandsegmente (189) aufweisen, daß jeweils die von einer Wandaußenseite beginnenden Zwischenräume zwischen den ersten Wandsegmenten (189) teilweise von weiteren, hohlen, unter Überdruck stehenden zweiten Wandsegmenten (191) ausgefüllt sind, die mit den ersten Wandsegmenten (189) verbunden sind, daß an die den Wandaußenseiten abgewandten Seiten der ersten Wandsegmente (189) Folien unter dem in den wandsegmentfreien Zwischenräumen herrschenden Unterdruck angedrückt sind, und daß die ersten Wandsegmente (189) der beiden Hälften um die Hälfte des Abstands der Wandsegmente (189) versetzt zueinander angeordnet sind.

3. Bauelement, insbesondere nach Anspruch 1 bis 2,
**dadurch gekennzeichnet,**
daß die Kammeranordnung eine Wand aus zwei Platten (188, 190) aufweist, die auf den Innenseiten Wülste (192) enthalten, die auf den beiden Platten versetzt zueinander angeordnet sind und über die unelastische Seile (194) mit geringer Wärmeleitfähigkeit gespannt sind, und daß die Wülste (192) unter einem in Hohlraum (196) zwischen den Platten (188, 190) herrschenden Unterdruck oder Vakuum gegen die Seite (194) angedrückt sind.

4. Halle bzw. Hallenkonstruktion aus Bauelementen nach einem oder mehreren der Ansprüche 1 bis 3,
**dadurch gekennzeichnet,**
daß die Halle (200) einen gegenüber der Umgebung höheren Druck aufweisenden Innenraum (208) umschließt, daß die Halle (200) eine Hallendachkonstruktion (204) aufweist, die als wenigstens doppelwandige Hülle ausgebildet ist, daß die Hülle eine Außenhülle (212) und eine Innenhülle (210) umfaßt, die durch gasgefüllte Stützsegmente (214) zueinander beabstandet sind und daß im zwischen den Stützsegmenten (214) vorhandenen Zwischenraum (216) ein Vakuum erzeugbar ist.

5. Hallenkonstruktion nach einem oder mehreren der vorhergehenden Ansprüche,
**dadurch gekennzeichnet,**
daß bei Erwärmung des Innenraums (208) der Hallenkonstruktion (200) diese einen Auftrieb derart erfährt, daß die Hallenkonstruktion schwebt.

6. Bauelement nach einem oder mehreren der vorhergehenden Ansprüche, insbesondere für einen Ballon oder Luftschiff,
**dadurch gekennzeichnet,**
daß sich von einer zentralen Kammer (218) strahlenförmig röhrenförmige mit Gas gefüllte Stützsegmente (220) nach außen erstecken, daß die Stützsegmente peripher von einer Hülle (224) umschlossen sind, wobei ein von der Hülle umgebender Balloninnenraum (240) druckeinstellbar ist.

7. Bauelement nach Anspruch 8,
**dadurch gekennzeichnet,**
daß die Hülle (224) ein mit einer Vakuumpumpe (238) zusammenwirkendes Ventil (236) aufweist.

8. Bauelement nach einem oder mehreren der vorhergehenden Ansprüche,
**dadurch gekennzeichnet,**
daß die Stützsegmente (220) eine AußenHülle (228) aufweisen, die aus einer hochfesten, wärmeabsorbierenden und hitzebeständigen Folie bestehen.

9. Bauelement nach einem oder mehreren der vorhergehenden Ansprüche,
**dadurch gekennzeichnet,**
daß die Stützsegmente (220) an ihren Enden (222) einen Wärmeisolator (226) zur Aufnahme der Hülle (224) aufweisen.

10. Bauelement nach einem oder mehreren der vorhergehenden Ansprüche,
**dadurch gekennzeichnet,**
daß Kammeranordnung (217) eine Wärmekraftmaschine bestehend aus einem Verdampfer (242), einer Energiewandlereinheit (246) und Rohrleitungen (244, 248) aufweist.

11. Bauelement nach einem oder mehreren der vorhergehenden Ansprüche,
**dadurch gekennzeichnet,**
daß der Verdampfer in der zentralen Kammer (218) angeordnet ist.

12. Bauelement nach einem oder mehreren der vorhergehenden Ansprüche,
**dadurch gekennzeichnet,**
daß die Kammeranordnung (217) einen Energiespeicher (250) und einen Wasserspeicher (252) aufweist, die in dem evakuierten Innenraum (255) angeordnet sind.

13. Bauelement nach einem oder mehreren der vorhergehenden Ansprüche,
**dadurch gekennzeichnet,**
daß die Kammeranordnung als Luftschiff ausgebildet ist, wobei die Kammeranordnung (217) eine kugelförmige, ellipsoidisch oder diskus Form aufweist und wobei an der Hülle (224) eine Gondel (270) angebracht ist, die einen Antrieb (272) aufweist.

## Claims

1. A building element, in particular for lightweight constructions such as halls and airship structures having first wall segments (181) mutually spaced, hollow and subjected to over-pressure and extending over the whole thickness of the wall, with an intermediate space being formed between said wall segments (181) and designed at least in parts as a negative pressure chamber (184),
**wherein**
in each case a part of the intermediate spaces between said first wall segments (118) and starting at a wall outer side is filled by hollow second wall segments (118) that are subjected to over-pressure and that form with a wall (183) arranged between the wall inside ends of said first wall segments (181) and the walls of said first wall sections (181, 182) the negative pressure chambers (184), with a vacuum being adjustable in said negative pressure chambers (184) to generate a lift.

2. A building element according to Claim 1 in particular,
**wherein**
said chamber arrangement has walls of which at least one (185) contains two identically designed halves (186, 187) arranged on the inside and on the outside respectively and having first hollow wall segments (189) subjected to over-pressure and arranged at a distance from one another, wherein in each case said intermediate spaces beginning from one wall outer side and between said first wall segments (189) are partially filled by further second hollow wall segments (191) subjected to overpressure and connected to said first wall segments (189), wherein on the sides of said first wall segments (189) facing away from the wall outer sides films are pressed on under the negative pressure prevailing in the wall segment-free intermediate spaces, and wherein said first wall segments (189) of the two halves are arranged offset in relation to one another by half the spacing of said wall segments (189).

3. A building element according to Claims 1 to 2 in particular,
**wherein**
said chamber arrangement has a wall comprising two plates (188, 190) containing on their insides beads (192) arranged offset in relation to one another on said two plates and clamped via the non-elastic ropes (194) of low conductivity, and wherein said beads (192) press against said ropes (194) under a negative pressure or vacuum prevailing in the hollow space (196) between said plates (188, 190).

4. A hall or hall structure comprising building elements according to one or more of Claims 1 to 3,
**wherein**
said hall (200) surrounds an interior area (208) having a higher pressure than the surroundings, wherein said hall (200) has a hall roof structure (204) designed as an at least double-walled skin, wherein said skin comprises an outer skin (212) and an inner skin (210) kept apart by gas-filled supporting segments (214), and wherein a vacuum is generatable in the intermediate space (216) between said supporting segments (214).

5. A hall structure according to one or more of the previous claims,
**wherein**
when said interior area (208) of said hall structure (200) is heated, said structure undergoes lift, such that the hall structure floats.

6. A chamber arrangement according to one or more of the previous claims, in particular for a balloon or airship,
**wherein**
tubular gas-filled supporting segments (220) radiate outwards from a central chamber (218), wherein said supporting segments are surrounded peripherally by a skin (224), with a balloon interior (240) enclosed by said skin being adjustable in pressure.

7. A building element according to Claim 6,
**wherein**
said skin (224) has a valve (236) interacting with a vacuum pump (238).

8. A building element according to one or more of the previous claims,
**wherein**
said supporting segments (220) have an outer skin (228) comprising a high-strength, heat-absorbing and heat-resistant film.

9. A building element according to one or more of the previous claims,
**wherein**
said supporting segments (220) have at their ends (222) a heat insulator (226) for holding the skin (224).

10. A building element according to one or more of the previous claims,
**wherein**
said chamber arrangement (217) has a heat engine comprising an evaporator (242), an energy convener unit (246) and piping (244, 248).

11. A building element according to one or more of the previous claims,
**wherein**
said evaporator is arranged in said central chamber (218).

12. A building element according to one or more of the previous claims,
**wherein**
said chamber arrangement (217) has an energy accumulator (250) and a water accumulator (252) arranged in the evacuated interior area (255).

13. A building element according to one or more of the previous claims,
**wherein**
said chamber arrangement is designed as an airship, where said chamber arrangement (217) has a spherical, ellipsoid or disk shape and has on said outer skin (224) a car (270) containing a drive unit (272).

## Revendications

1. Elément de construction, essentiellement pour bâtiments en construction allégée, tels qu'enceintes et dirigeables, avec des premiers segments de paroi (181) à un certaine distance l'un de l'autre, creux et sous surpression et s'étendant sur toute l'épaisseur de la paroi, un espace intermédiaire étant formé entre les segments (181) et présentant au moins dans certaines zones une chambre de dépression (184),
**caractérisé en ce que**
respectivement une partie des espaces intermédiaires commençant sur une face extérieure de la paroi est remplie entre les premiers segments de paroi (181) de deuxièmes segments de paroi (181) creux se trouvant sous surpression, formant, avec une paroi (183) disposée entre les extrémités des faces intérieures des premiers segments de paroi (181) et les parois des premiers segments (181, 182), les chambres de dépression (184), un vide pour la génération d'une force ascensionnelle pouvant être réglé dans les chambres de dépression (184).

2. Elément de construction selon essentiellement la revendication 1,
**caractérisé en ce que**
la disposition des chambres présente des parois, dont au moins une (185) comprend deux moitiés (186, 187) de même configuration, disposées respectivement à l'intérieur et à l'extérieur, présentant respectivement à une certaine distance l'un de l'autre, des premiers segments de paroi (189) creux et se trouvant sous surpression, que les espaces intermédiaires commençant sur une face extérieure de la paroi sont remplis respectivement entre les premiers segments (189) avec d'autres deuxièmes segments (191) creux se trouvant sous surpression et reliés avec les premiers segments (189), que des pellicules sont pressées sur les faces des premiers segments (189) opposées aux faces extérieures des parois sous l'effet de la dépression régnant dans les espaces intermédiaires sans segment de paroi, et que les premiers segments de paroi (189) des deux moitiés sont disposés en déport l'un par rapport à l'autre respectivement de la moitié de la distance entre les segments de paroi (189).

3. Elément de construction, essentiellement selon les revendications 1 à 2,
**caractérisé en ce que**
la disposition des chambres présente une paroi en deux plaques (188, 190) comprenant sur les faces intérieures des renflements (192) disposés en déport l'un par rapport à l'autre sur les deux plaques et tendus par le biais des cordes non élastiques (194) avec une faible conductibilité thermique, et que les renflements (192) sont pressés contre les cordes (194) sous l'effet de la dépression ou du vide régnant dans l'espace creux (196) entre les plaques (188, 189).

4. Enceinte ou construction en enceinte en éléments de construction selon une ou plusieurs des revendications 1 à 3,
**caractérisée en ce que**
l'enceinte (200) entoure l'espace Intérieur (208) présentant une pression supérieure à celle de l'environnement, que l'enceinte (200) a la forme d'un toit de hangar (204) présentant une gaine à au moins deux parois, que la gaine présente une gaine extérieure (212) et une gaine intérieure (210), écartées l'une de l'autre par des segments supports (214) remplis de gaz, et qu'un vide peut être généré dans l'espace Intermédiaire (216) situé entre les segments supports (214).

5. Construction en enceinte selon une ou plusieurs des revendications précédentes,
**caractérisée en ce que**
lors d'échauffement de l'espace intérieur (208) de la construction en enceinte (200) cette dernière reçoit une force ascensionnelle telle qu'elle flotte.

6. Elément de construction selon une ou plusieurs des revendications précédentes, essentiellement pour un ballon ou un dirigeable,
**caractérisé en ce que**
à partir d'une chambre centrale (218) des segments supports (220) tubulaires remplis de gaz s'étendent sous forme de rayons vers l'extérieur, que les segments supports sont entourés sur la périphérie d'une gaine (224), la pression d'un espace intérieur (240) du ballon entouré par la gaine pouvant être réglée.

7. Elément de construction selon la revendication 8,
**caractérisé en ce que**
la gaine (224) présente une vanne (236) concourant avec une pompe à vide (238).

8. Elément de construction selon une ou plusieurs des revendications précédentes,
**caractérisé en ce que**
les segments supports (220) présentent une gaine extérieure (228) consistant en une pellicule à haute résistante, ablative et résistant à la chaleur.

9. Elément de construction selon une ou plusieurs des revendications précédentes,
**caractérisé en ce que**
les segments supports (220) présentent à leurs extrémités (222) un isolateur thermique (226) pour la réception de la gaine (224).

10. Elément de construction selon une ou plusieurs des revendications précédentes,
**caractérisé en ce que**
la disposition des chambres (217) présente un moteur thermique comprenant un évaporateur (242), une unité convertisseur d'énergie (246) et des tuyauteries (244, 248).

11. Elément de construction selon une ou plusieurs des revendications précédentes,
**caractérisé en ce que**
l'évaporateur est disposé dans la chambre centrale (218).

12. Elément de construction selon une ou plusieurs des revendications précédentes,
**caractérisé en ce que**
la disposition des chambres (217) présente un accumulateur d'énergie (250) et un réservoir d'eau (252) disposés dans l'espace intérieur évacué (255).

13. Elément de construction selon une ou plusieurs des revendications précédentes,
**caractérisé en ce que**
la disposition des chambres est conçue comme dirigeable, la disposition des chambres (217) présentant une forme sphérique, ellipsoïdale ou discoïde et une nacelle (270), présentant un entraînement (272), étant fixée à la gaine (224).
